# EUROPÄISCHE PATENTSCHRIFT

(11) **EP 2 102 048 B1**
(45) Veröffentlichungstag und Bekanntmachung des Hinweises auf die Patenterteilung: **25.06.2014**
(21) Anmeldenummer: 07847594.4
(22) Anmeldetag: 30.11.2007
(51) Int. Cl.: B60T 8/36

(54) **HYDROAGGREGAT EINER HYDRAULISCHEN FAHRZEUGBREMSANLAGE**
HYDRAULIC UNIT OF A VEHICLE HYDRAULIC BRAKE SYSTEM
GROUPE HYDRAULIQUE D'UN SYSTÈME DE FREINAGE HYDRAULIQUE D'UN VÉHICULE

(30) Priorität: 19.12.2006 DE 102006059923
(43) Veröffentlichungstag der Anmeldung: 23.09.2009
(73) Patentinhaber: Robert Bosch GmbH, 70442 Stuttgart (DE)
(72) Erfinder: GNAMM, Bernhard, Summerville-South Carolina, South Carolina 29485 (US); WEH, Andreas, 87477 Sulzberg (DE)
(86) Internationale Anmeldenummer: PCT/EP2007/063078
(87) Internationale Veröffentlichungsnummer: WO 2008/074612

(56) Entgegenhaltungen:
- WO-A-97/22503
- DE-A1- 10 246 030
- DE-A1- 19 963 757
- JP-A- 4 356 262
- JP-A- 2001 080 487

## Beschreibung

### Stand der Technik

Die Erfindung betrifft ein Hydroaggregat einer hydraulischen Fahrzeugbremsanlage mit einem Hydraulikblock, einer Speichereinrichtung und einer Halteeinrichtung, bei dem die Speichereinrichtung in den Hydraulikblock eingesetzt ist und die Halteeinrichtung zum ortsfesten Haltern des Hydraulikblocks an einem zugehörigen Fahrzeug angepasst ist. Ferner betrifft die Erfindung eine Speichereinrichtung eines Hydroaggregats einer Fahrzeugbremsanlage, welche zum Anordnen in einem Hydraulikblock des Hydroaggregats vorgesehen ist und eine Fläche aufweist, die im derart eingesetzten Zustand der Speichereinrichtung eine Außenseite des Hydroaggregats bildet.

Hydroaggregate werden bei hydraulischen Fahrzeugbremsanlagen verwendet, um an zugeordneten Bremsen wahlweise hydraulisches Fluid zu- oder abzufördern. Bei der Förderung des hydraulischen Fluids kommt es bedingt durch die verwendbaren Pumpen und die Bewegungen zugehöriger Kolben an Hauptbremszylinder und Bremsen zu Strömungsstößen und Pulsationen. Um derartige Strömungsstöße und Pulsationen abzufangen, sind an bekannten Hydroaggregaten Speichereinrichtungen vorgesehen, welche zeitweise hydraulisches Fluid aufnehmen und dieses nachfolgend wieder abgeben können. Die Speichereinrichtungen sind mit einem Hohlraum gebildet, der in dem zugehörigen Hydraulikblock ausgebildet ist und weisen in der Regel einen Kolben auf, der federbelastet ist und von Fluid verschoben werden kann, welches in die Speichereinrichtung einströmt. Um den Hohlraum fluiddicht zu verschließen, ist an bekannten Speichereinrichtungen ein Speicherdeckel vorgesehen, der in den zugehörigen Hydraulikblock eingeschraubt oder eingepresst und verstemmt ist.

Hydraulikaggregate derartiger hydraulischer Fahrzeugbremsanlagen sind in dem zugehörigen Fahrzeug ortsfest anzubringen und müssen dabei in der Regel auch gedampft befestigt sein, damit Vibrationen und Stöße des Fahrzeugs nicht vollständig auf das Hydroaggregat übertragen werden und umgekehrt das Hydroaggregat relativ zum Fahrzeug einen gewissen Bewegungsspielraum aufweist, während es betrieben wird. Ferner dient die gedämpfte Halterung des Hydraulikblocks eines Hydroaggregats besonders dazu, eine Körperschallübertragung von dem Hydraulikblock und der sich darin befindenden Pumpe auf das restliche Fahrzeug möglichst zu verhindern.

Aus WO 97/22503 A ist ein Hydraulikaggregat mit einem Gehäuse und wenigstens einem das Gehäuse verschließenden Deckel bekannt. Zur Fixierung an einem ortsfesten Bauteil ist am Deckel eine Haltevorrichtung angebracht.

Aus DE 199 63 757 A ist eine elastische Lagerung eines insbesondere elektrohydraulischen Aggregats einer Fahrzeugbremsanlage bekannt. Die elastische Lagerung ist als Dreipunktbefestigung mit gummielastischen Dämpfungselementen an den Befestigungsstellen ausgebildet.

Bei bekannten Hydroaggregaten wird ständig versucht, die oben genannten Funktionen möglichst umfassend zu erfüllen und zugleich eine besonders kostengünstige Herstellung und Montage des gesamten Hydroaggregats zu erreichen.

Es ist daher eine Aufgabe der Erfindung ein Hydroaggregat und eine Speichereinrichtung eines Hydroaggregats bereitzustellen, mit dem eine funktionsgerechte Speicherung von hydraulischem Fluid gewährleistet ist und welches darüber hinaus noch kostengünstiger hergestellt und montiert werden kann, als bekannte Vorrichtungen.

### Offenbarung der Erfindung

Die Aufgabe ist erfindungsgemäß mit einem Hydroaggregat gemäß Anspruch 1 gelöst. Vorteilhafte Weiterbildungen der Erfindung sind in den abhängigen Ansprüchen definiert.

Gemäß der Erfindung ist die Aufgabe mit einem Hydroaggregat einer hydraulischen Fahrzeugbremsanlage gelöst, welches einen Hydraulikblock, eine Speichereinrichtung und eine Halteeinrichtung aufweist und bei dem die Speichereinrichtung in den Hydraulikblock eingesetzt ist und die Halteeinrichtung zum ortsfesten Haltern des Hydraulikblocks an einem zugehörigen Fahrzeug angepasst ist. Ferner ist die Speichereinrichtung mit einer Haltefläche gestaltet, welche einen Abschnitt der Außenseite des Hydroaggregats bildet, und bei dem die Halteeinrichtung an dieser Haltefläche der Speichereinrichtung angreift, um den Hydraulikblock über die Speichereinrichtung ortsfest zu haltern.

Mit der erfindungsgemäßen Lösung ist der Speichereinrichtung eines Hydroaggregats einer Fahrzeugbremsanlage eine Doppelfunktion zugewiesen, indem sie zum einen als Speicher für hydraulisches Fluid dient und zum anderen eine Haltefunktion für den gesamten Hydraulikblock des Hydroaggregats übernimmt. Die Haltefunktion ist gemäß der Erfindung dabei besonders kostengünstig bereitgestellt, indem zum Haltern eine Fläche entsprechend angepasst ist, welche im montierten Zustand der Speichereinrichtung eine Außenseite des Hydroaggregats bildet. An diese außenseitige, erfindungsgemäß eine Haltefläche bildende Fläche der Speichereinrichtung ist dann gemäß der Erfindung eine Halteeinrichtung angesetzt, mit der der Hydraulikblock über die Speichereinrichtung ortsfest gehaltert ist.

Erfindungsgemäß wird also die Speichereinrichtung um die Haltefunktion erweitert. Es entfällt dadurch eine besondere Bearbeitung bzw. Vorbereitung des Hydraulikblocks, welcher eigentlich als Pumpengehäuse dient, und auch das Anbringen eines gesonderten Halteelements an dem Hydraulikblock. Darüber hinaus kann der bisher erforderliche Platzbedarf für ein gesondertes Halteelement eingespart werden. Ferner ist die Anzahl der Bauteile des erfindungsgemäßen Hydroaggregats geringer, als bei bekannten Hydroaggregaten. Dies hat im Hinblick auf die Logistikkosten der Herstellung und der Ersatzteilversorgung Vorteile.

Schließlich bildet die erfindungsgemäße Lösung auch die Grundlage und den Ausgangspunkt für weitere Verbesserungen und Kosteneinsparungen an umliegenden und funktional mit der Haltefläche zusammenwirkenden Elementen des erfindungsgemäßen Hydroaggregats. Derartige weitere Verbesserungen werden nachfolgend beschrieben.

Als weitere Verbesserung der erfindungsgemäßen Lösung ist bevorzugt die Haltefläche der Speichereinrichtung mit einem elastischen Element gestaltet, welches an einem Teil der Speichereinrichtung angebracht ist, das ortsfest an dem Hydraulikblock befestigt ist. Das derart ortsfest angebrachte Teil der Speichereinrichtung ist bevorzugt ein Speicherdeckel, der während seiner Herstellung besonders kostengünstig bzw. nahezu kostenneutral zum Anordnen eines elastischen Element entsprechend angepasst werden kann. Das elastische Element kann ähnlich bisher bekannter Elemente gestaltet sein. Besonders bevorzugt ist es aber derart gestaltet, dass es auf einen an einem Speicherdeckel ausgebildeten Dorn aufgeschoben werden kann.

Vorteilhaft ist ferner die Halteeinrichtung mit einem Blech gestaltet, in dem eine Öffnung ausgebildet ist, in welcher die Haltefläche der Speichereinrichtung und insbesondere das elastische Element eingeschoben und formschlüssig gehalten ist. Eine derartige Lösung ist besonders kostengünstig und die zugehörigen Bauteile sind einfach auch automatisiert montierbar. Alternativ oder zusätzlich ist die Halteeinrichtung vorteilhaft mittels einer kraftschlüssigen Verbindung, insbesondere einer Klebeverbindung gestaltet.

Die Speichereinrichtung ist ferner vorteilhaft und kostengünstig mit einem Speicherdeckel gestaltet, welcher in den Hydraulikblock eingepresst ist und an dessen Außenseite die Haltefläche ausgebildet ist.

Bei einem Hydroaggregat, bei dem insgesamt zwei Speichereinrichtungen, nämlich eine für jeweils einen von zwei Bremskreisen, vorgesehen sind, ist erfindungsgemäß nur an einer der Speichereinrichtungen eine Haltefläche für die Halteeinrichtung ausgebildet. Mit dieser Lösung ist gemäß der Erfindung eine Halterung geschaffen, bei der der Hydraulikblock nur an zwei Punkten, zum einen an einer der Speichereinrichtungen und zum anderen an einem direkt am Hydroaggregat selbst angebrachten Lagerpunkt gehalten ist.

Schließlich ist gemäß der Erfindung die Halteeinrichtung des erfindungsgemäßen Hydroaggregats selbst gewinkelt gestalt, an einem ersten Schenkel des Winkels ist die Haltefläche der Speichereinrichtung angeordnet und an dem zweiten Schenkel des Winkels ist ein zweiter Haltebereich für den Hydraulikblock ausgebildet. Ferner sind die Haltebereiche derart gestaltet, dass die Halteeinrichtung mit einer rein linearen Bewegung an den Hydraulikblock angesetzt und dabei an einem Haltebereich formschlüssig und an dem anderen Haltebereich kraftschlüssig gehalten ist. Auch diese Weiterbildung birgt im Hinblick auf die Gesamtkosten der Montage und deren Automatisierbarkeit besondere Vorteile.

### Kurze Beschreibung der Zeichnungen

Nachfolgend wird ein Ausfiihrungsbeispiel eines erfindungsgemäßen Hydraulikaggregats und einer zugehörigen erfindungsgemäßen Speichereinrichtung anhand der beigefügten schematischen Zeichnungen näher erläutert. Es zeigt:
Fig. 1 eine perspektivische Ansicht eines Hydroaggregats gemäß dem Stand der Technik,
Fig. 2 eine perspektivische Ansicht eines Hydroaggregats gemäß der Erfindung,
Fig. 3 die Seitenansicht III gemäß Fig. 2 des zugehörigen Hydraulikblocks,
Fig. 4 die Seitenansicht IV gemäß Fig. 3 und
Fig. 5 den Schnitt V-V gemäß Fig. 4.

### Ausführungsform der Erfindung

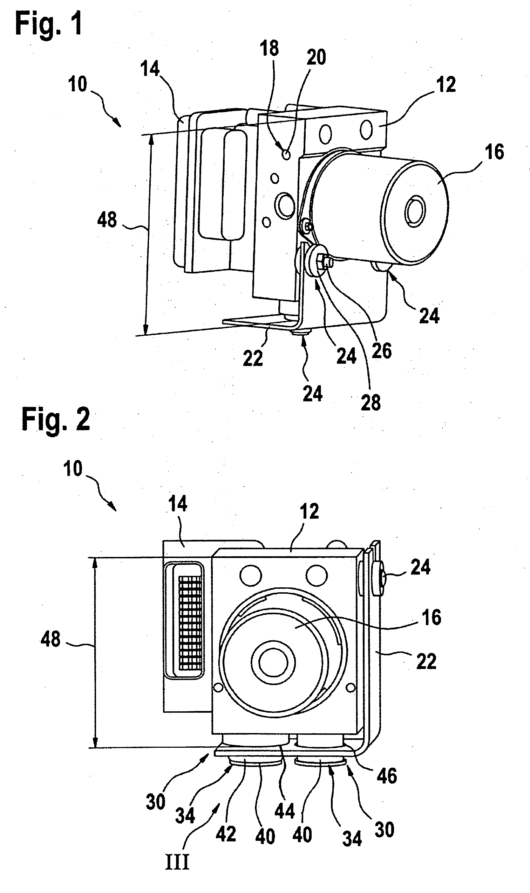

In Fig. 1 ist ein Hydroaggregat 10 gemäß dem Stand der Technik veranschaulicht, welches als wesentliche Elemente einen im Wesentlichen quaderförmigen Hydraulikblock 12 und ein daran angeordnetes Steuergerät 14 umfasst. Der Hydraulikblock 12 dient unter anderem zum Aufnehmen einer (nicht dargestellten) Hydraulikpumpe deren Pumpenmotor 16 aus dem Hydraulikblock 12 seitlich herausragt. In dem Hydraulikblock 12 sind ferner mittels Bohrungen Hydraulikkanäle 18 ausgebildet, welche teilweise an der Außenseite des Hydraulikblocks 12 mittels Verstemmungen 20 verschlossen sind.

Zum ortsfesten und zugleich gedämpften Haltern des Hydraulikblocks 12 an einem zugehörigen (nicht dargestellten) Fahrzeug, ist eine Halteeinrichtung 22 in Form eines Winkelblechs vorgesehen, an dem der Hydraulikblock 12 mittels dreier Haltelager 24 abgestützt ist. Jedes der Haltelager 24 ist dabei als speziell auf die Halte- bzw. Stützfunktion angepasstes Bauteil an dem Hydraulikblock 12 angeschraubt. Das einzelne Haltelager 24 weist ferner einen nach außen vom Hydraulikblock 12 abstehenden Dorn 26 auf, auf den ein elastisches Element 28 aufgeschoben ist.

In den Fig. 2 bis 5 ist ein Ausführungsbeispiel eines erfindungsgemäßen Hydroaggregats 10 veranschaulicht, bei dem ebenfalls ein Hydraulikblock 12, ein Steuergerät 14, ein Pumpenmotor 16 und Hydraulikkanäle 18 vorgesehen sind. Das Hydraulikaggregat 10 gemäß der Erfindung weist ferner zwei Speichereinrichtungen 30 auf, die mit je einem im Hydraulikblock 12 ausgestalteten Hohlraum 32 gebildet sind.

Der jeweilige Hohlraum 32 ist mit einem zugehörigen Speicherdeckel 34 versehen, der in den Hydraulikblock 12 verstemmt ist. Auf diese Weise ist der Hohlraum 32 zum Äußeren des Hydraulikblocks 12 hin fluiddicht verschlossen. In dem jeweiligen Hohlraum 32 befinden sich eine Schraubenfeder 36 und ein Kolben 38, der mit der Schraubenfeder 36 in Richtung auf einen der Hydraulikkanäle 18 federnd vorgespannt ist.

Einer der Speicherdeckel 34 dient zugleich als Halter bzw. Haltelager für die zugehörige Halteeinrichtung 22, welche auch bei dem erfindungsgemäßen Hydroaggregat 10 in Form eines Winkelbleches gestaltet ist. Der Speicherdeckel 34 weist dabei eine außenliegende Haltefläche 40 in Form eines zylindrischen Ansatzes auf, auf die ein speziell angepasstes elastisches Element 42 aufgeschoben ist. Das elastische Element 42 ist an der Haltefläche 40 durch elastische Aufweitung kraftschlüssig gehalten und in eine Öffnung 44 eingeschoben, welche an der Halteeinrichtung 22 derart ausgebildet ist, dass das elastische Element 42 auch dort kraftschlüssig gehalten ist. An der Halteeinrichtung 22 ist ferner eine zweite Öffnung 46 ausgebildet, in welche die Haltefläche 40 in Form des zylindrischen Ansatzes der zweiten Speichereinrichtung 30 hineinragt. An diesem zylindrischen Ansatz'ist jedoch bei der in Fig. 2 dargestellten Ausführungsbeispiel kein elastisches Element 42 angeordnet, so dass sich der Hydraulikblock 10 in Bezug auf diese Öffnung 46 geringfügig bewegen kann. Es ist lediglich ein weiteres Haltelager 24 an dem zweiten Schenkel der als Winkelblech gestalteten Halteeinrichtung 22 vorgesehen, so dass insgesamt eine 2-Punkt-Lagerung für den Hydraulikblock geschaffen ist.

Mit der derartigen Gestaltung eines Hydroaggregats 10 gemäß den Fig. 2 bis 5 ist eine in Bezug auf die Herstellungs- und Montagekosten besonders günstige Lösung geschaffen. Darüber hinaus kann mit dieser Lösung das Hydroaggregat 10 insgesamt besonders klein gestaltet werden, was in Bezug auf den benötigten Bauraum von Vorteil ist. So ist insbesondere die in Fig. 2 mit Bezugszeichen 48 veranschaulichte Höhe des erfindungsgemäßen Hydroaggregats 10 erheblich geringer als bei vergleichbaren Hydroaggregaten 10 gemäß dem Stand der Technik (siehe Fig. 1).

## Patentansprüche

1. Hydroaggregat (10) einer hydraulischen Fahrzeugbremsanlage mit einem Hydraulikblock (12), einer Speichereinrichtung (30) und einer Halteeinrichtung (22), bei dem die Speichereinrichtung (30) in den Hydraulikblock (12) eingesetzt ist und die Halteeinrichtung (22) zum ortsfesten Haltern des Hydraulikblocks (12) an einem zugehörigen Fahrzeug angepasst ist,
wobei die Speichereinrichtung (30) mit einer Haltefläche (40) gestaltet ist, welche einen Abschnitt der Außenseite des Hydroaggregats (10) bildet und die Halteeinrichtung (22) an dieser Haltefläche (40) der Speichereinrichtung (30) angreift, um den Hydraulikblock (12) über die Speichereinrichtung (30) ortsfest zu haltern,
**dadurch gekennzeichnet, dass** zwei Speichereinrichtungen (30) vorgesehen sind, von denen nur an einer Speichereinrichtung (30) eine Haltefläche (40) für die Halteeinrichtung (22) ausgebildet ist,
dass der Hydraulikblock (12) nur an zwei Punkten, zum einen an einer der Speichereinrichtungen (30) und zum anderen an einem direkt am Hydroaggregat (10) selbst angebrachten Lagerpunkt gehalten ist, und
dass die Halteeinrichtung (22) gewinkelt gestalt ist, an einem ersten Schenkel des Winkels die einen ersten Haltebereich bildende Haltefläche (40) der Speichereinrichtung (30) angeordnet ist und an dem zweiten Schenkel des Winkels ein zweiter Haltebereich (24) für den Hydraulikblock (12) ausgebildet ist, und die Haltebereiche (40, 44; 24) derart gestaltet sind, dass die Halteeinrichtung (22) mit einer rein linearen Bewegung an den Hydraulikblock (12) angesetzt und dabei an einem der Haltebereiche (24) formschlüssig und an dem anderen Haltebereich (40, 44) kraftschlüssig gehalten ist.

2. Hydroaggregat nach Anspruch 1,
**dadurch gekennzeichnet, dass** die Haltefläche (40) der Speichereinrichtung (30) mit einem elastischen Element (42) gestaltet ist, welches an einem Teil (34) der Speichereinrichtung (30) angebracht ist, das ortsfest an dem Hydraulikblock (12) befestigt ist.

3. Hydroaggregat nach Anspruch 1 oder 2,
**dadurch gekennzeichnet, dass** die Halteeinrichtung (22) mit einem Blech gestaltet ist, in dem eine Öffnung (44; 46) ausgebildet ist, in welcher die Haltefläche (40) der Speichereinrichtung (30) und insbesondere das elastische Element (42) eingeschoben und formschlüssig gehalten ist.

4. Hydroaggregat nach einem der Ansprüche 1 bis 3,
**dadurch gekennzeichnet, dass** die Speichereinrichtung (30) mit einem Speicherdeckel (34) gestaltet ist, welcher in den Hydraulikblock (12) eingepresst ist und an dessen Außenseite die Haltefläche (40) ausgebildet ist.

## Claims

1. Hydraulic unit (10) of a vehicle hydraulic brake system, with a hydraulic block (12), with an accumulator device (30) and with a holding device (22), in which the accumulator device (30) is inserted into the hydraulic block (12) and the holding device (22) is adapted for holding the hydraulic block (12), fixed in place, on an associated vehicle,
the accumulator device (30) being configured with a holding surface (40) which forms a portion of the outside of the hydraulic unit (10), and the holding device (22) engaging on this holding surface (40) of the accumulator device (30) in order to hold the hydraulic block (12), fixed in place, via the accumulator device (30),
**characterized in that** two accumulator devices (30) are provided, on only one accumulator device (30) of which a holding surface (40) for the holding device (22) is formed,
**in that** the hydraulic block (12) is held at only two points, on the one hand, on one of the accumulator devices (30) and, on the other hand, at a bearing point attached directly to the hydraulic unit (10) itself, and
**in that** the holding device (22) has an angled configuration, the holding surface (40), forming a first holding region, of the accumulator device (30) is arranged on a first leg of the angle, a second holding region (24) for the hydraulic block (12) is formed on the second leg of the angle, and the holding regions (40, 44; 24) are configured in such a way that the holding device (22) is appended to the hydraulic block (12) by means of a purely linear movement at the same time is held positively on one of the holding regions (24) and non-positively on the other holding region (40, 44).

2. Hydraulic unit according to Claim 1, **characterized in that** the holding surface (40) of the accumulator device (30) is configured with an elastic element (42) which is attached to a part (34) of the accumulator device (30) which is fastened, fixed in place, to the hydraulic block (12).

3. Hydraulic unit according to Claim 1 or 2, **characterized in that** the holding device (22) is configured with a metal sheet, in which is formed an orifice (44; 46) in which the holding surface (40) of the accumulator device (30) and, in particular, the elastic element (42) are pushed in and held positively.

4. Hydraulic unit according to one of Claims 1 to 3, **characterized in that** the accumulator device (30) is configured with an accumulator cover (34) which is pressed into the hydraulic block (12) and on the outside of which the holding surface (40) is formed.

## Revendications

1. Groupe hydraulique (10) d'un système de freinage hydraulique de véhicule, comprenant un bloc hydraulique (12), un dispositif accumulateur (30) et un dispositif de retenue (22), le dispositif accumulateur (30) étant inséré dans le bloc hydraulique (12) et le dispositif de retenue (22) étant prévu pour retenir de manière fixée en position le bloc hydraulique (12) sur un véhicule associé,
le dispositif accumulateur (30) étant configuré avec une surface de retenue (40) qui forme une portion du côté extérieur du groupe hydraulique (10) et le dispositif de retenue (22) venant en prise au niveau de cette surface de retenue (40) du dispositif accumulateur (30), afin de retenir de manière fixée en position le bloc hydraulique (12) par le biais du dispositif accumulateur (30), **caractérisé en ce que** deux dispositifs accumulateurs (30) sont prévus, une surface de retenue (40) pour le dispositif de retenue (22) étant réalisée sur seulement un dispositif accumulateur (30),
**en ce que** le bloc hydraulique (12) est retenu seulement en deux points, d'une part au niveau de l'un des dispositifs accumulateurs (30) et d'autre part au niveau d'un point de palier lui-même monté directement sur le groupe hydraulique (10), et
**en ce que** le dispositif de retenue (22) est configuré sont forme coudée, la surface de retenue (40) du dispositif accumulateur (30), formant une première région de retenue, étant disposée au niveau d'une première branche du coude, et une deuxième région de retenue (24) pour le bloc hydraulique (12) étant réalisée au niveau de la deuxième branche du coude, et les régions de retenue (40, 44 ; 24) étant configurées de telle sorte que le dispositif de retenue (22) soit amené avec un mouvement purement linéaire contre le bloc hydraulique (12) et soit ainsi retenu par engagement par correspondance de forme au niveau de l'une des régions de retenue (24) et par engagement par force au niveau de l'autre région de retenue (40, 44).

2. Groupe hydraulique selon la revendication 1,
**caractérisé en ce que** la surface de retenue (40) du dispositif accumulateur (30) est configurée avec un élément élastique (42) qui est monté sur une partie (34) du dispositif accumulateur (30) qui est fixée de manière fixée en position sur le bloc hydraulique (12).

3. Groupe hydraulique selon la revendication 1 ou 2,
**caractérisé en ce que** le dispositif de retenue (22) est configuré avec une tôle dans laquelle est réalisée une ouverture (44 ; 46), dans laquelle la surface de retenue (40) du dispositif accumulateur (30) et notamment l'élément élastique (42) est enfoncée et est retenue par engagement par correspondance de forme.

4. Groupe hydraulique selon l'une quelconque des revendications 1 à 3,
**caractérisé en ce que** le dispositif accumulateur (30) est configuré avec un couvercle d'accumulateur (34) qui est pressé dans le bloc hydraulique (12) et au niveau du côté extérieur duquel est réalisée la surface de retenue (40).
